# FASCICULE DE BREVET EUROPEEN

(11) **EP 1 521 342 B1**
(45) Date de publication et mention de la délivrance du brevet: **24.10.2007**
(21) Numéro de dépôt: 04103329.1
(22) Date de dépôt: 13.07.2004
(51) Int. Cl.: H02B 1/46

(54) **Dispositif de fermeture pour boîte électrique.**
Schliessvorrichtung für elektrische Dose
Closing device for electric box

(30) Priorité: 29.07.2003 FR 0309312
(43) Date de publication de la demande: 06.04.2005
(73) Titulaire: SCHNEIDER ELECTRIC INDUSTRIES SAS, 92500 Rueil-Malmaison (FR)
(72) Inventeur: Bouet, Emmanuel, 67200, Sarre Union (FR); Buchy, Bernard, 67320, Schoenbourg (FR); Larsky, Pierre, 57450, Cappel (FR)

(56) Documents cités:
- DE-U- 7 833 886

## Description

La présente invention concerne un dispositif de fermeture pour enveloppe en matière isolante, notamment pour une boîte industrielle ou de dérivation pour éléments électriques.

De telles boîtes, usuelles sur le marché, comprennent par exemple un boîtier de forme générale prismatique qui comporte un fond et des parois latérales, afin de définir un espace pour recevoir des éléments électriques, notamment de câblage, de connexion, d'interruption, etc...Un couvercle est rapporté sur le boîtier de manière amovible pour fermer l'espace, et il est assemblé au boîtier par des organes de fixation qui sont logés dans des cheminées respectives prévues aux angles du couvercle et du boîtier. Des boîtes de ce type sont décrites dans les documents US 4 632 269, DE U 79 04 441 et DE U 7 833 886.

Les boîtes connues ont l'inconvénient de nécessiter des dispositions différentes suivant que le couvercle va être fixé au boîtier par des éléments à verrouillage quart de tour ou par des vis coopérant avec un écrou, puisque l'écrou nécessaire dans le second cas est inutile dans le premier cas.

L'invention a pour but de faciliter, dans une boîte du type décrit, la pose et la fixation d'un couvercle sur le boîtier aussi bien avec des éléments à verrouillage quart de tour qu'avec des systèmes composés de vis et d'écrous.

Selon l'invention, on prévoit dans la cheminée d'angle une cloison qui délimite une chambre principale, cette chambre étant dotée de moyens adaptés à l'insertion et au maintien, au choix, d'un organe de fixation du type quart de tour ou d'un organe de fixation du type vis filetée, et la cloison comprend une ouverture apte à recevoir une forme de verrouillage de l'organe quart de tour quand celui-ci se déplace ; l'ouverture est contiguë à une bride de retenue propre à bloquer la forme de verrouillage afin de maintenir le couvercle fermé.

La cloison peut aussi délimiter, outre la chambre principale de passage pour la vis ou l'élément quart de tour, une chambre annexe comportant au niveau de l'ouverture des éléments de guidage en rotation et de blocage prévus sous la bride de retenue pour gui-der et respectivement retenir la forme de verrouillage propre à l'organe quart de tour.

La cheminée peut avantageusement être isolée de l'espace interne du boîtier par une paroi pleine, et la bride de retenue est alors formée par un rebord qui se raccorde à la paroi pleine et avance transversalement dans la cheminée pour se raccorder à la cloison, de sorte que la cloison et la bride déterminent la partition de la cheminée en la chambre principale et en une chambre annexe.

Il est de préférence prévu, pour coopérer avec la vis, un adaptateur muni d'un trou fileté et monté dans la cheminée d'angle, la bride de retenue étant située et agencée pour retenir l'organe quart de tour et respectivement l'adaptateur.

L'ouverture de la cloison forme de préférence une fenêtre bordée latéralement par des nervures, avec un bord inférieur qui est légèrement décalé par rapport au bord supérieur dans une direction opposée au centre du boîtier. Ceci conserve à la cloison une bonne rigidité et facilite le montage de l'adaptateur.

La cloison peut déterminer pour l'adaptateur une butée formée par le bord inférieur de l'ouverture, et l'adaptateur présente une branche élastique située de préférence vers le centre du boîtier et munie d'au moins un crochet d'arrêt, lequel crochet coopère avec la bride de retenue pour empêcher l'extraction de l'adaptateur hors de la cheminée.

Le couvercle peut présenter un fût de forme adaptée au profil de la partie de la cheminée située au-dessus de la bride de retenue et le fût, à la pose du couvercle sur le boîtier, contraint l'adaptateur de façon à confirmer le verrouillage de son crochet d'arrêt.

L'élément quart de tour ou la vis de fixation présente des ailettes de retenue similaires, coopérant avec le couvercle pour assurer leur imperdabilité relativement au couvercle.

D'autres caractéristiques et avantages vont apparaître dans la description détaillée qui suit, avec référence à un mode de réalisation donné à titre d'exemple et représenté par les dessins annexés.

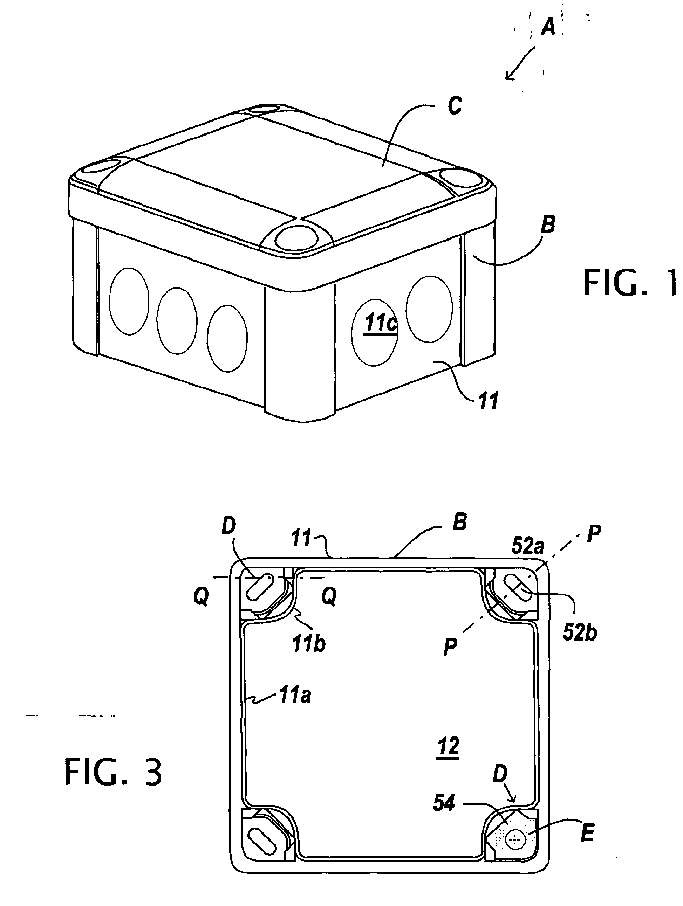

La figure 1 représente en perspective une boîte pour organes électriques conforme à l'invention.
La figure 2 est une vue en perspective éclatée de la boîte représentée figure 1.
La figure 3 est une vue de dessus du boîtier de la boîte, le couvercle étant ôté.
La figure 4 montre, en coupe selon le plan P-P de la figure 3, un coin de la boîte doté d'un élément de fixation quart de tour, celui-ci étant en position de blocage.
La figure 5 montre l'élément de fixation quart de tour en position de déblocage
La figure 6 montre, en coupe selon le plan P-P de la figure 3, un coin de la boîte doté d'une vis de fixation.
La figure 7 montre à plus grande échelle un détail de la coupe Q-Q de la figure 3.
Les figures 8 et 9 illustrent en perspective un coin de la boîte, vu respectivement de l'avant et de l'arrière.
Les figures 10 à 12 représentent en perspective l'élément de fixation quart de tour, la vis de fixation et l'adaptateur associé à cette vis.

La boîte A illustrée sur les figures est une boîte industrielle, une boîte de dérivation, un coffret ou autre enveloppe analogue destinée à contenir des organes ou éléments électriques. La boîte, de forme générale quadrangulaire, comprend un boîtier B et un couvercle C en matière isolante. Le boîtier B présente une paroi de fond 10 et des parois latérales 11 afin de définir un espace interne 12 pour loger les éléments électriques. Les parois latérales 11 définissent à l'opposé de la paroi de fond 10 un col périphérique 11a qui reçoit de façon étanche le couvercle C. Les parois 11 se raccordent entre elles aux coins par des parois d'angle rentrantes 11 b qui dégagent en dehors de l'espace 12 des volumes affectés à des cheminées cloisonnées orientées transversalement à la paroi de fond 10. Des ouvertures 11 c auxquelles sont adaptés des opercules découpables ou défonçables sont d'autre part prévues dans les parois 11 pour y faire passer des câbles.

Le couvercle C, de forme quadrangulaire, est fixé au boîtier B par des organes de fixation du type quart de tour S1 ou du type vis filetée S2. Aux quatre coins, le couvercle C offre des orifices 20 dont chacun, d'axe orienté transversalement à la paroi de fond 10, ménage un passage pour l'élément de fixation S1 ou S2. Chaque orifice 20 loge la tête de l'élément S1 ou S2 et a un fond 21 pourvu d'un passage rétréci 22 pour le fût de l'élément de fixation S1 ou S2. Du côté du boîtier, le couvercle C présente, aux quatre coins et coaxialement aux orifices 20, des colonnettes de guidage et de protection 23 à forme générale cylindrique.

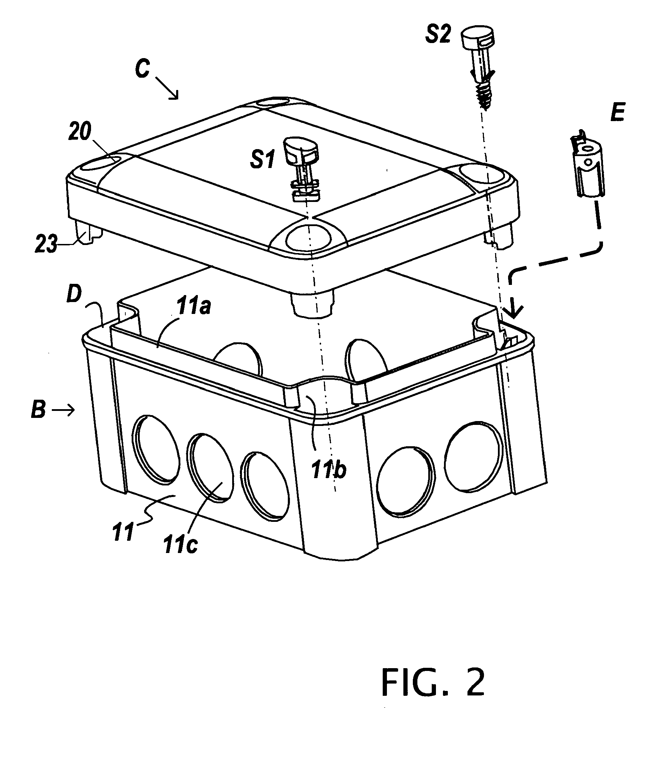

Le boîtier A présente aux quatre coins des cheminées cloisonnées D (voir notamment figures 2 à 5). Chaque cheminée D s'étend du haut en bas du boîtier et est agencée pour recevoir indifféremment l'organe de fixation quart de tour S1 d'axe X ou l'organe de fixation à vis S2 d'axe X et son adaptateur E. Les termes "bas" et "haut" ou "inférieur" et "supérieur" seront utilisés par la suite pour désigner les parties de la boîte situées vers le fond et respectivement vers le couvercle. L'axe X est perpendiculaire à la paroi de fond 10.

La cheminée D comporte une cloison 51 qui la sépare en un volume principal - chambre de guidage 52 - et un volume annexe - chambre annexe 53. La cloison 51 se raccorde, à sa partie haute et vers le centre de la boîte, à la paroi d'angle rentrante 11b par une bride 54 sensiblement perpendiculaire à l'axe X et à la direction générale de la cheminée ; à sa partie basse, la cloison 51 se poursuit jusqu'au fond 10 du boîtier. La bride 54 offre sur sa face inférieure une forme 55 de guidage pour l'organe quart de tour, cette forme présentant en sous-face un cran d'arrêt 55a (nervure, godron, point dur,..) et une butée 55b pour l'organe quart de tour S1.

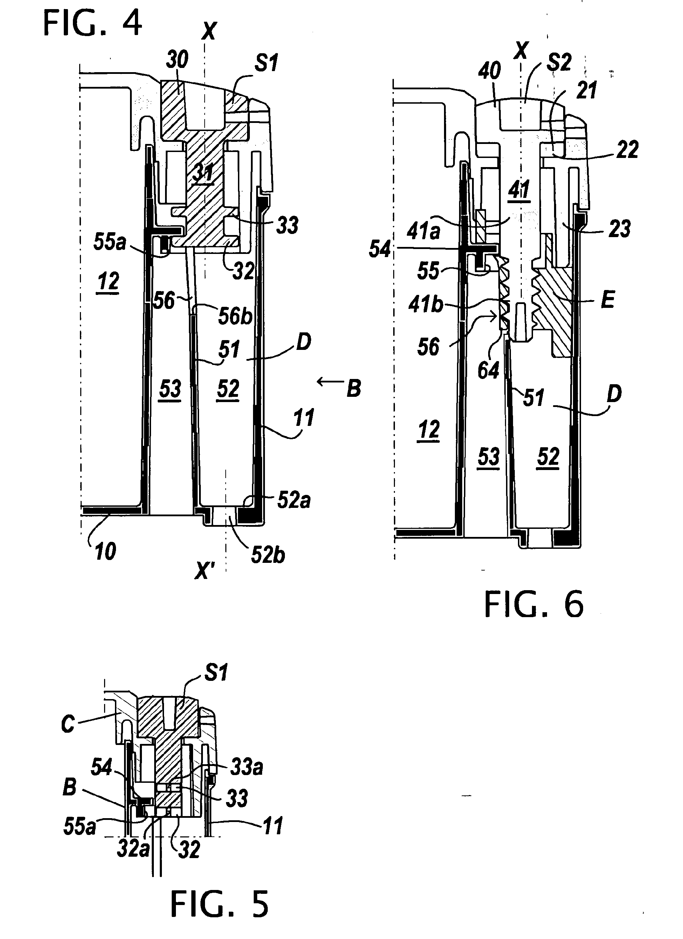

La chambre de guidage 52 se termine vers le fond 10 par un élément de paroi 52a muni d'un passage 52b pour un organe de fixation (non représenté) destiné à fixer la boîte à un support. Comme on le voit figures 4 et 6, l'axe X de l'organe de fixation quart de tour S1 et de la vis de fixation S2 et l'axe X' de l'organe de fixation de la boîte au support s'inscrivent tous deux dans la chambre 52.

La cloison 51 définit une ouverture 56 en forme de fenêtre ayant un bord supérieur 56a, un bord inférieur 56b et des bords latéraux constitués par des nervures 57 qui raccordent la cloison aux parois latérales 11 du boîtier de la boîte, afin de cadrer l'adaptateur et de raidir la cloison. Du fait que la cloison 51 est dotée d'une dépouille, le bord inférieur est décalé en direction centrifuge (c'est-à-dire vers l'extérieur de la boîte) par rapport au bord supérieur.

L'organe quart de tour S1 (voir figures 4,5 et 10) présente une tête 30 dotée d'une empreinte de manoeuvre 30a, et une tige 31 qui se termine à l'opposé de la tête par une forme de verrouillage 32 telle qu'un doigt. Le doigt 32 a toute forme appropriée, par exemple une forme de talon ou d'enclume, et il est doté d'au moins une échancrure de maintien 32a pour coopérer avec le cran 55a. La tige 31 porte aussi, entre la tête 30 et le doigt 32, un épaulement 33 doté d'au moins une échancrure de maintien 33a pour coopérer avec un cran de l'orifice 20 du couvercle. Des éléments de maintien élastique dans le couvercle, tels que des ailettes 34, lèvres ou analogues, sont prévus en dépassement de la section droite de la tige.

La vis filetée S2 présente une tête 40 et une tige 41 ; celle-ci se partage en une partie non filetée 41a dotée de lèvres ou d'ailettes 42 similaires aux ailettes 34 de l'élément S1, et une partie filetée à pas rapide 41b. La vis coopère avec l'adaptateur E pour fermer le boîtier. L'adaptateur E s'emboîte dans la chambre de guidage 52, par un corps 60 qui a une section droite adaptée à la chambre 52, et qui est traversé par un trou à filetage femelle 61. Du côté du centre du boîtier B de la boîte, l'adaptateur E a un ou deux bras élastiques 62 de forme adaptée à l'ouverture 56 et dotés d'un crochet d'arrêt 63. Quand l'adaptateur est introduit dans la cheminée, il bute par sa face inférieure 64 contre le bord inférieur 56b de l'ouverture 56, tandis que ses bras élastiques 62 fléchissent et que, en fin d'insertion, les crochets 63 s'engagent sous la bride 54 de la cheminée. Une forme de préhension 65 est prévue à la partie supérieure de l'adaptateur E pour constituer une ouverture 65a qui permet l'extraction de l'adaptateur hors de la cheminée au moyen d'un outil. L'adaptateur E présente en outre un trou borgne fileté 66 qui lui permet de recevoir une vis de fixation de charnière; ceci est le cas quand on souhaite monter le couvercle de manière pivotante sur le boîtier au moyen de deux pièces de charnière.

La boîte conforme à l'invention se monte de la manière expliquée ci-après.

### couvercle équipé d'organes de fixation quart de tour S1

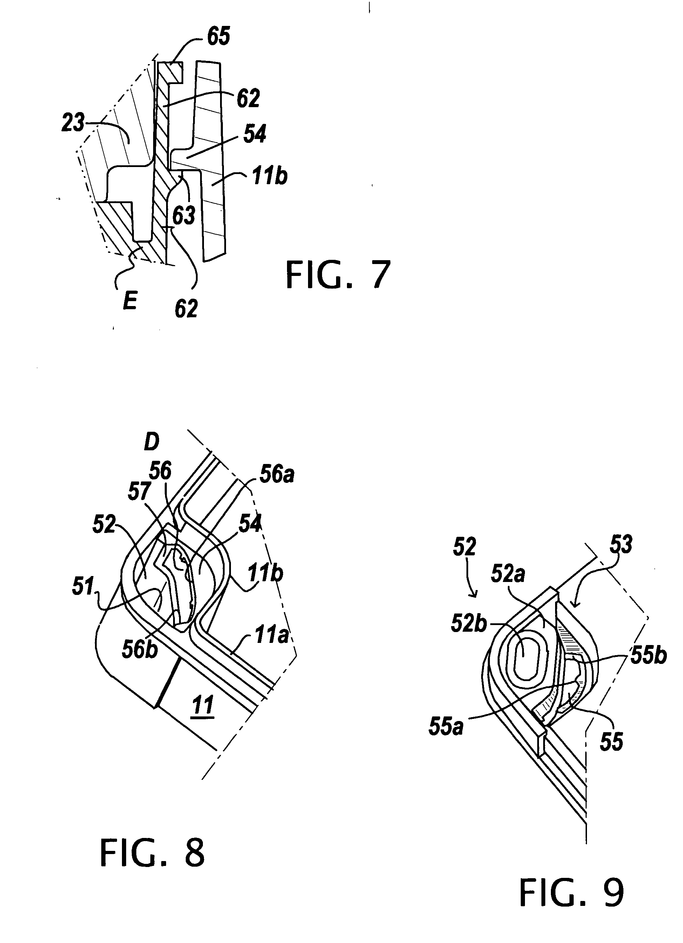

chaque organe quart de tour S1 est orienté avec son doigt 32 et son épaulement 33 dans le sens de la longueur de la fente 22 pour pouvoir être glissé dans l'orifice respectif 20 ; à l'insertion, les ailettes 34 fléchissent au passage du fond 21 de l'orifice 22, puis reprennent leur position oblique de retenue, de sorte que l'organe S1 reste maintenu imperdable dans l'orifice 20. Quand le couvercle C est posé sur le boîtier B, les colonnettes 23 d'engagent dans la partie supérieure des cheminées D. On fait alors tourner l'organe S1 vers sa position de blocage, de manière guidée par la forme 55 (voir figure 9), et l'on observe que cette rotation ne peut s'effectuer que dans un seul sens, car dans l'autre sens le doigt bute en position de départ contre la butée 55b. En faisant tourner l'organe S1 de 90°, on l'amène dans la position illustrée figure 4, où le doigt 32 est engagé par son échancrure 32a contre le cran d'arrêt 55a, en même temps qu'appliqué contre la butée 55b. Pour ouvrir la boîte, on effectue le déblocage des organes S1 par rotation inverse de 90°, jusqu'à l'application du doigt 32 contre la butée 55b.

### couvercle équipé de vis de fixation S2

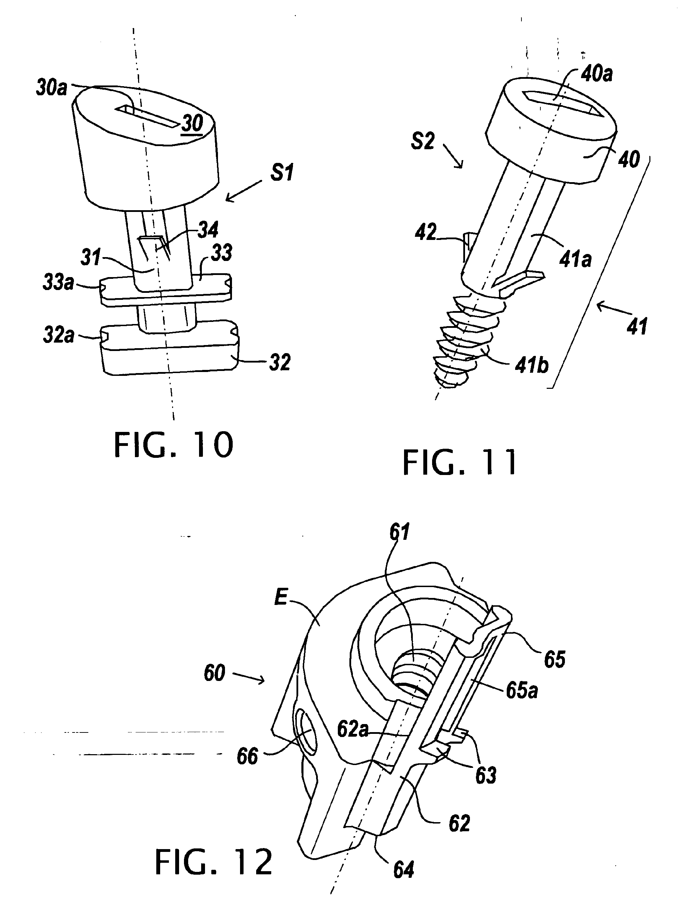

les vis S2, qui ont un encombrement général similaire à celui des organes S1, sont logées dans les orifices respectifs 20 du couvercle C comme les organes S1 et elles sont également maintenues imperdables par leurs ailettes 42. Le boîtier est préalablement équipé des adaptateurs E par insertion de ceux-ci, selon une direction parallèle à X, dans les cheminées D. Chaque adaptateur E est glissé dans le haut de la chambre 52, de manière guidée par la face intérieure concave de la paroi latérale du boîtier (à l'opposé de la paroi 11 b), par la tranche de la bride 54 et éventuellement par les nervures 57. Le mouvement de l'adaptateur se poursuit jusqu'à butée de sa face inférieure 64 (voir figures 6 et 12) contre le bord inférieur 56b de l'ouverture de la cloison 51, cette butée s'accompagnant de l'encliquetage du crochet d'arrêt 63 sous la bride 54. Le couvercle C peut alors être posé sur le boîtier B. Les colonnettes cylindriques 23 s'engagent alors dans la partie haute des cheminées et viennent presser les bras élastiques 62, en confirmant ainsi le blocage anti-extraction réalisé par les crochets 63. Chaque vis S2 peut alors être mise en rotation pour s'engager par son filet mâle dans le filet femelle de l'adaptateur respectif E, ce qui entraîne le blocage du couvercle sur le boîtier.

Pour retirer l'adaptateur, il suffit de glisser un outil dans l'ouverture 65a de la forme de préhension 65 (figure 12) et de tirer vers le haut. La description qui précède suppose que les quatre coins de la boîte sont tous équipés d'organes de fixation quart de tour ou de vis ; on peut dans certains cas équiper deux coins voisins avec de tels éléments et les deux autres coins avec de simples crans de fixation, ou avec des charnières bénéficiant pour leur montage du même adaptateur E, ces charnières étant mises en place au moyen de vis classiques, autotaraudeuses ou autoformeuses, coopérant avec un trou borgne 66 de l'adaptateur.

### liste des références

- **A**: **boîte**

- **B**: **boîtier**
- 10: fond
- 11: parois latérales
11a col, 11b paroi d'isolement d'angle, 11c ouvertures
- 12: espace interne

- **C**: **couvercle**
- 20: ouverture d'angle
- 21: fond de l'ouverture
- 22: passage (fente)
- 23: colonnette cylindrique

- **S1**: **organe quart de tour**
- 30: tête
30a empreinte
- 31: tige
- 32: doigt (enclume) de verrouillage
32a échancrure
- 33: épaulement
33a échancrure
- 34: ailettes

- **S2**: **vis filetée**
- 40: tête
40a empreinte
- 41: tige
41a partie non filetée 41b partie filetée
- 42: ailettes

- **D**: **cheminée cloisonnée**
- 51: cloison
- 52: chambre de guidage
52a fond, 52b passage
- 53: chambre annexe
- 54: bride
- 55: forme de guidage
55a cran d'arrêt, 55b butée
- 56: ouverture
56a bord supérieur, 56b bord inférieur
- 57: nervures

- **E**: **adaptateur**
- 60: corps prismatique
- 61: trou fileté
- 62: bras élastique(s)
62a face pressée
- 63: crochet(s) d'arrêt
- 64: face inférieure de butée
- 65: forme de préhension
65a ouverture
- 66: trou borgne pour charnière

## Revendications

1. Dispositif de fermeture pour enveloppe en matière isolante, notamment boîte industrielle ou de dérivation pour éléments électriques, comprenant :
- un boîtier (B) de forme générale quadrangulaire présentant un fond et des parois latérales, et définissant un espace interne pour recevoir des éléments électriques,
- un couvercle (C) rapporté de manière amovible sur le boîtier pour fermer l'espace interne, et assemblé au boîtier par des organes de fixation associés au couvercle et logés dans des cheminées respectives (D) prévues aux angles du boîtier et isolées de l'espace interne,
***caractérisé par le fait que***
- dans la cheminée d'angle (D) est prévue une cloison (51) qui délimite une chambre principale (52), dotée de moyens adaptés à l'insertion et au maintien, au choix, d'un organe de fixation du type quart de tour (S1) doté d'une forme de verrouillage (32) ou d'un organe de fixation du type vis filetée (S2),
- la cloison (51) comprend une ouverture (56) apte à recevoir la forme de verrouillage (32) de l'organe quart de tour (S1), quand celui-ci se déplace, l'ouverture de la cloison étant contiguë à une bride de retenue (54) propre à retenir la forme de verrouillage (32).

2. Dispositif selon la revendication 1, **caractérisé par le fait qu**'il est prévu, pour coopérer avec la vis (S2), un adaptateur (E) muni d'un trou fileté et monté dans la chambre principale (52) de la cheminée d'angle (D), et que la bride de retenue (54) est située et agencée pour retenir l'adaptateur (E).

3. Dispositif selon la revendication 1, **caractérisé par le fait que** la cheminée (D) est isolée de l'espace interne (12) du boîtier (B) par une paroi pleine (11b), et que la bride de retenue (54) est formée par un rebord qui se raccorde à la paroi pleine (11 b) et avance transversalement dans la cheminée pour se raccorder à la cloison (51), de sorte que la cloison et la bride déterminent la partition de section de la cheminée en la chambre principale (52) et en une chambre annexe.

4. Dispositif selon la revendication 3, **caractérisé par le fait que** l'ouverture (56) de la cloison forme une fenêtre bordée latéralement par des nervures (57).

5. Dispositif selon la revendication 3, **caractérisé par le fait que** l'ouverture (56) de la cloison (51) a un bord supérieur (56a), et un bord inférieur (56b) qui est légèrement décalé par rapport au bord supérieur (56a) dans une direction opposée au centre du boîtier.

6. Dispositif selon la revendication 2, **caractérisé par le fait que** la cloison (51) détermine pour l'adaptateur (E) une butée formée par le bord inférieur (56b) de l'ouverture, et que l'adaptateur présente une branche élastique (62) munie d'au moins un crochet d'arrêt (63), lequel crochet coopère avec la bride de retenue (54) pour empêcher l'extraction de l'adaptateur hors de la cheminée d'angle (D).

7. Dispositif selon la revendication 6, **caractérisé par le fait que** le couvercle (C) présente une colonnette (23) de forme adaptée au profil de la partie de la cheminée (D) située au-dessus de la bride de retenue (54), et que la colonnette, à la pose du couvercle sur le boîtier, contraint l'adaptateur (E) de façon à confirmer le verrouillage de son crochet d'arrêt (63).

8. Dispositif selon la revendication 1, **caractérisé par le fait que** l'organe quart de tour (S1) et la vis de fixation (S2) présentent chacun des ailettes de retenue (34;42) se m-blables coopérant avec le couvercle pour assurer leur imperdabilité.

## Claims

1. Closing device for an enclosure made of an insulating material, particularly for an industrial or junction box for electrical elements, comprising :
- a generally quadrangular-shaped housing (B) comprising a bottom wall and sidewalls, and delimiting an internal space for containing electrical elements,
- a removable cover (C) added onto the housing to close the internal space, and assembled to the housing by attachment devices associated with the cover and housed in corresponding ducts (D) provided at the corners of the housing and isolated from the internal space,
**characterised in that**
- a partition (51) is provided in the corner duct (D) that delimits a main chamber (52), this chamber being provided with means adapted for inserting and maintaining a quarter turn type attachment device (S1) provided with a locking base (32) or a threaded screw type attachment device (S2), as required
- the partition (51) is provided with an opening (56) in which the locking base (32) of the quarter turn device (S1) can be fitted, when the device moves, the opening in the partition being contiguous with a retaining flange (54) designed to lock the locking base (32).

2. Device according to claim 1, **characterised in that** an adaptor (E) is provided to cooperate with the screw (S2), provided with a threaded hole and located in the main chamber (52) in the corner duct (D), and **in that** the retaining flange (54) is located and arranged so as to retain the adaptor (E).

3. Device according to claim 1, **characterised in that** the duct (D) is isolated from the internal space (12) of the housing (B) by a solid wall (11b), and **in that** the retaining flange (54) is formed by an edge connected to the solid wall (11b) and that moves transversely in the duct to connect to the partition (51), such that the partition and the flange define the section partition of the duct into a main chamber (52) and an auxiliary chamber.

4. Device according to claim 3, **characterised in that** the opening (56) of the partition forms a window surrounded laterally by ribs (57).

5. Device according to claim 3, **characterised in that** the opening (56) of the partition (51) has an upper edge (56a), and a lower edge (56b) that is slightly offset from the upper edge (56a) in a direction opposite the centre of the housing.

6. Device according to claim 2, **characterised in that** the partition (51) forms a limit stop for the adaptor (E) formed by the lower edge (56b) of the opening, and that the adaptor has an elastic arm (62) provided with at least one stop hook (63), the said hook cooperates with the retaining flange (54) to prevent extraction of the adaptor from outside the corner duct (D).

7. Device according to claim 6, **characterised in that** the cover (C) is provided with a cylinder (23) with a shape adapted to the profile of the part of the duct (D) located above the retaining flange (54), and that the cylinder, when the cover is placed on the housing, constrains the adaptor (E) so as to confirm locking of its stop hook (63).

8. Device according to claim 1, **characterised in that** the quarter turn device (S1) and the attachment screw (S2) are each provided with similar retaining fins (34;42) cooperating with the cover to make them captive to the cover.

## Patentansprüche

1. Schließvorrichtung für eine Hülle aus Isolierstoff, insbesondere eine Industriedose oder Abzweigdose für elektrische Elemente, die aufweist:
- ein Gehäuse (B) von allgemein viereckiger Form mit einem Boden und Seitenwänden, das einen Innenraum definiert, um elektrische Elemente aufzunehmen,
- einen lösbar auf das Gehäuse aufgesetzten Deckel (C), um den Innenraum zu verschließen, und der mit dem Gehäuse durch Befestigungsorgane zusammengebaut wird, die dem Deckel zugeordnet und in jeweiligen Schächten (D) angeordnet sind, die an den Ecken des Gehäuses vorgesehen und vom Innenraum isoliert sind,
**dadurch gekennzeichnet, dass**
- im Eckschacht (D) eine Trennwand (51) vorgesehen ist, die eine Hauptkammer (52) begrenzt, die mit Mitteln versehen ist, die für das wahlweise Einfügen und Halten eines Befestigungsorgans vom Typ Vierteldrehung (S1), das mit einer Verriegelungsform (32) versehen ist, oder eines Befestigungsorgans vom Typ Gewindeschraube (S2) geeignet sind,
- die Trennwand (51) eine Öffnung (56) aufweist, die die Verriegelungsform (32) des Vierteldrehungsorgans (S1) aufnehmen kann, wenn dieses sich verschiebt, wobei die Öffnung der Trennwand an einen Rückhalteflansch (54) angrenzt, der geeignet ist, um die Verriegelungsform (32) zu halten.

2. Vorrichtung nach Anspruch 1, **dadurch gekennzeichnet, dass** zur Zusammenwirkung mit der Schraube (S2) ein Adapter (E) vorgesehen ist, der mit einem Gewindeloch versehen und in die Hauptkammer (52) des Eckschachts (D) montiert ist, und dass der Rückhalteflansch (54) angeordnet und ausgebildet ist, um den Adapter (E) zu halten.

3. Vorrichtung nach Anspruch 1, **dadurch gekennzeichnet, dass** der Schacht (D) vom Innenraum (12) des Gehäuses (B) durch eine massive Wand (11b) isoliert ist, und dass der Rückhalteflansch (54) von einer Randleiste gebildet wird, die an die massive Wand (11b) anschließt und quer in den Schacht vorsteht, um sich an die Trennwand (51) anzuschließen, so dass die Trennwand und der Flansch die Querschnittsaufteilung des Schachts in die Hauptkammer (52) und eine Nebenkammer festlegen.

4. Vorrichtung nach Anspruch 3, **dadurch gekennzeichnet, dass** die Öffnung (56) der Trennwand ein Fenster bildet, das seitlich von Rippen (57) umrahmt wird.

5. Vorrichtung nach Anspruch 3, **dadurch gekennzeichnet, dass** die Öffnung (56) der Trennwand (51) einen oberen Rand (56a) und einen unteren Rand (56b) hat, der bezüglich des oberen Rands (56a) in eine Richtung entgegengesetzt zur Mitte des Gehäuses leicht versetzt ist.

6. Vorrichtung nach Anspruch 2, **dadurch gekennzeichnet, dass** die Trennwand (51) für den Adapter (E) einen Anschlag bestimmt, der vom unteren Rand (56b) der Öffnung geformt wird, und dass der Adapter einen elastischen Zweig (62) aufweist, der mit mindestens einem Sperrhaken (63) versehen ist, wobei der Haken mit dem Rückhalteflansch (54) zusammenwirkt, um das Herausziehen des Adapters aus dem Eckschacht (D) zu verhindern.

7. Vorrichtung nach Anspruch 6, **dadurch gekennzeichnet, dass** der Deckel (C) einen Bolzen (23) mit einer Form aufweist, die an das Profil des Bereichs des Schachts (D) oberhalb des Rückhalteflanschs (54) angepasst ist, und dass der Bolzen beim Aufsetzen des Deckels auf das Gehäuse den Adapter (E) einzwängt, um die Verriegelung seines Sperrhakens (63) zu bestärken.

8. Vorrichtung nach Anspruch 1, **dadurch gekennzeichnet, dass** das Vierteldrehungsorgan (S1) und die Befestigungsschraube (S2) gleiche Halteflügel (34; 42) aufweisen, die mit dem Deckel zusammenwirken, um ihre Unverlierbarkeit zu gewährleisten.
